Europäisches Patentamt

European Patent Office

Office européen des brevets

(11) Numéro de publication: **0 220 994 B1**

## FASCICULE DE BREVET EUROPEEN

(45) Date de publication de fascicule du brevet:
12.06.91

(21) Numéro de dépôt: **86420186.8**

(22) Date de dépôt: **08.07.86**

(51) Int. Cl.⁵: **G03B 27/68**

(54) **Appareil photo-mécanique à contact permettant de réaliser à partir d'originaux photographiques normaux des copies modifiées de caractère circulaire.**

(30) Priorité: **23.09.85 IT 8559685**

(43) Date de publication de la demande:
**06.05.87 Bulletin 87/19**

(45) Mention de la délivrance du brevet:
**12.06.91 Bulletin 91/24**

(84) Etats contractants désignés:
**BE DE FR GB IT LU NL SE**

(56) Documents cités:
**DE-A- 2 627 087**
**US-A- 3 374 724**
**US-A- 4 390 272**
**US-A- 4 396 280**
**US-A- 4 420 249**

(73) Titulaire: **Paccagnella, Giuseppe**
**Via Vigolo, 94**
**Vicenza(IT)**

(72) Inventeur: **Paccagnella, Giuseppe**
**Via Vigolo, 94**
**Vicenza(IT)**

(74) Mandataire: **Séraphin, Léon**
**PECHINEY 28, rue de Bonnel**
**F-69433 Lyon Cedex 03(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention a pour objet un appareil photo-mécanique a contact permettant de réaliser, à partir d'originaux photographiques normaux, des copies modifiées de caractère circulaire.

Dans l'industrie des récipients pour boissons, produits alimentaires, huiles de graissage, etc..., la forme la plus répandue est la forme cylindrique, suivie de la forme cônique.

Dans ces récipients, on cherche à utiliser toute la surface disponible à des fins publicitaires et en conséquence, l'utilisation d'impressions et d'étiquettes de forme circulaire pour les couvercles ou en segment de cercle pour l'étiquetage de formes côniques a trouvé un champ d'applications de plus en plus vaste.

Mais tant qu'il s'agit de mettre en cercle ou en segment circulaire une ligne d'écriture, la chose est assez simple et les systèmes manuels ou semi-automatiques peuvent servir à cette fin; au contraire, quand les images sont constituées par des dessins ou photographies en couleurs, le problème est pratiquement impossible à résoudre.

On a fait l'essai d'utiliser des lentilles anamorphiques, mais elles ont donné des résultats défectueux en ce sens que, de par leur nature même, elles ne donnent une image focalisée circulaire que pour une seule circonférence, tandis que,sur toute la surface restante, on a un flou dû à l'absence de focalisation.

Dernièrement, le problème a pris une plus grande acuité avec l'apparition des boîtes métalliques embouties.

Ces boîtes sont obtenues à partir d'un flan de tôle en forme de disque préalablement imprimé en couleurs qui est ensuite façonné par emboutissage pour réaliser un godet.

Il apparait tout de suite évident que, pour obtenir l'impression rectiligne qui apparaît sur la boîte finie, sur le flan qui est plan, l'impression doit avoir une forme circulaire.

Il est, en conséquence, nécessaire d'effectuer préalablement une déformation de l'étiquette rectiligne pour la mettre en cercle de façon à avoir après façonnage l'étiquette identique à l'original. C'est le but que se propose la présente invention.

On connait par le document US-A-4 390 272 un appareil photo-mécanique à contact capable de réaliser à partir d'un film original une image modifiée circulaire se refermant sur elle-même, cet appareil comportant d'une part une fente fixe laissant passer un pinceau de lumière qui éclaire ledit film original qui est porté par un châssis se déplaçant perpendiculairement audit pinceau de lumière, et d'autre part un disque rotatif qui, en position de travail, porte sur sa face avant regardant ledit film une pellicule sensible, l'axe de rotation de ce disque passant alors par ladite fente. Cet appareil est utilisé pour modifier la présentation d'images, par exemple pour mettre une inscription en cercle, et il est assez compliqué.

La demanderesse a cherché à mettre au point un appareil permettant un positionnement et un entraînement en rotation simples du disque portant le film sensible.

L'appareil de l'invention a les caractéristiques ci-dessus du document cité et est caractérisé en ce que, ledit axe peut être déplacé le long de cette fente, en ce que ledit disque est porté par un support rabattable par pivotement autour d'une axe fixe entre une position de repos dégagée, permettant l'application de la pellicule sensible, et ladite position de travail, et en ce que dans sa position de travail, ledit disque et ledit châssis sont couplés de telle manière que le disque est entraîne en rotation par le châssis.

Grâce à l'éclairage par le mince pinceau de lumière, on reproduit par balayage l'image originale en la transférant sur une pellicule animée d'un mouvement de rotation.

Pour obtenir un mouvement cohérent des deux pellicules, on a développé l'appareil suivant :

On fait déplacer un châssis portant une vitre sur deux glissières parallèles. Ce châssis peut être entraîné par des systèmes électro-mécaniques, pneumatiques ou oléodynamiques.

Au-dessus du châssis, on fixe, solidaire de la structure de l'appareil, une mince plaque métallique ou une pellicule non transparente dans laquelle est pratiquée une étroite fente à travers laquelle on obtiendra un mince pinceau de lumière produit par une lampe logée dans une boîte adéquate.

La monture de la lampe sera aussi statique et solidaire de tout l'appareil.

En actionnant le moteur, le châssis se déplacera au-dessus du rais de lumière. Si l'on a fixé à ce châssis une image photographique, celle-ci sera éclairée progressivement en la balayant.

Toujours solidaire de l'appareil, on applique au-dessus de la vitre un disque tournant dont le centre de rotation est positionné exactement sur un point du rais de lumière et au moyen d'une transmission mécanique ou autre système mentionné ci-dessus, on assurera l'entraînement de ce disque de telle sorte que son mouvement soit dépendant de celui du châssis qui se trouve au-dessous.

On obtiendra ainsi ce résultat que l'image du film fixé sur la vitre du châssis se transférera en fonction des deux mouvements cohérents, l'un rectiligne et l'autre circulaire, sur la pellicule à exposer qui est appliquée sur la face inférieure du disque, réalisant ainsi l'image d'allure circulaire désirée.

En réglant ces mouvements de sort que la vitesse du châssis soit égale à la vitesse circonférentielle sur le diamètre choisi, on aura la possibilité d'obtenir des cercles parfaitement fermés ou des segments de cercle parfaitement calculés à l'avance.

Le disque qui porte la pellicule sensible doit donc avoir la possibilité de se déplacer suivant l'axe coïncidant avec le rais de lumière, de façon à pouvoir faire varier à volonté le diamètre du cercle à reproduire.

D'autres caractéristiques et avantages de la présente invention apparaîtront avec plus d'évidence dans la description détaillée qui suit d'une forme de réalisation préférentielle illustrée à titre simplement indicatif et sans aucun caractère limitatif sur les dessins annexés qui représentent l'invention.

Les fig. 1a et 1c représentent l'appareil vu de profil et en plan, avec le disque soulevé en position de repos, tandis que, sur les fig. 1b et 1d, le disque est en position d'exposition.

Les fig. 2a et 2b montrent, en élévation et en vue de dessus, l'ensemble de la transmission depuis le châssis en mouvement rectiligne jusqu'au disque en rotation.

Sur les fig. 1a et 1c, qui montrent l'appareil en position de repos, ou plus précisément avec le disque soulevé, la lettre-repère (A) désigne les deux glissières longitudinales sur lesquelles se déplace dans les deux sens le châssis portant l'original repéré par la lettre (C).

On voit bien, sur la figure 1c, repérée par la lettre (D), la vitre qui repose sur le châssis (C) et sous celui-ci, la boîte repérée par la lettre (E) qui contient la lampe pour l'exposition qui, à travers la fente (F), crée le rais de lumière nécessaire pour le balayage.

La lettre (B) désigne le disque tournant qui porte la pellicule sensible, disque qui, en en position de repos, est retourné vers le haut pour faciliter l'application de cette pellicule.

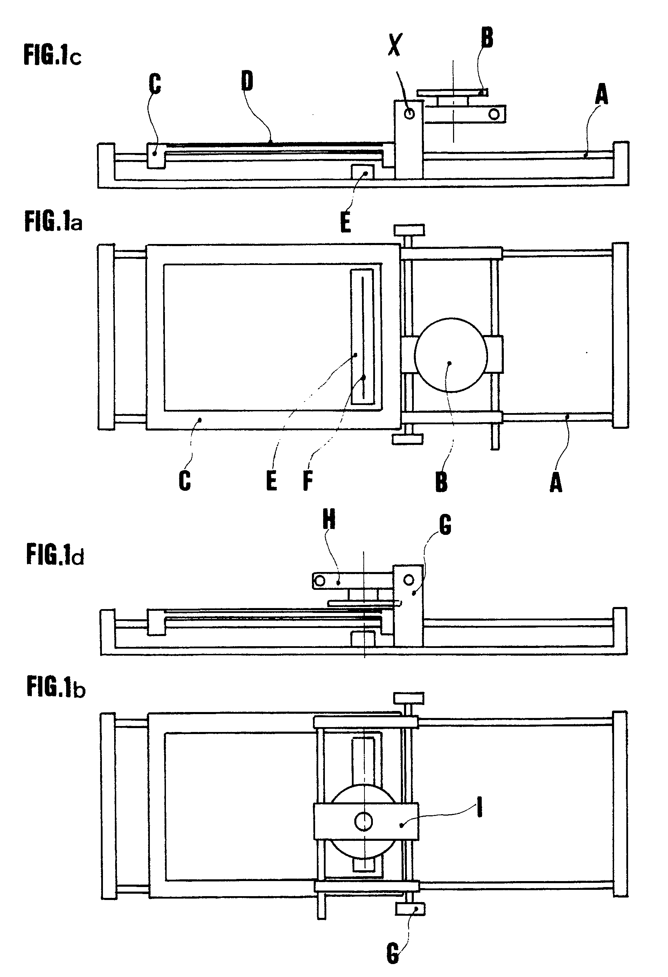

Les figures 1b et 1d représentent, au contraire, l'appareil avec le disque qui porte la pellicule sensible en position de travail. On peut remarquer que la partie sensible de la pellicule vient en contact avec le film original fixé sur la vitre. Sur ces figures 1b et 1d, la lettre (G) désigne les supports du disque, solidaires de l'appareil, la lettre (H) désigne l'ensemble rabattable qui porte le disque et la lettre (I) repère le coulisseau support de disque, coulisseau qui permet, grâce à la possibilité qu'il a de se déplacer perpendiculairement au mouvement rectiligne, d'obtenir le positionnement adapté à l'obtention des divers diamètres.

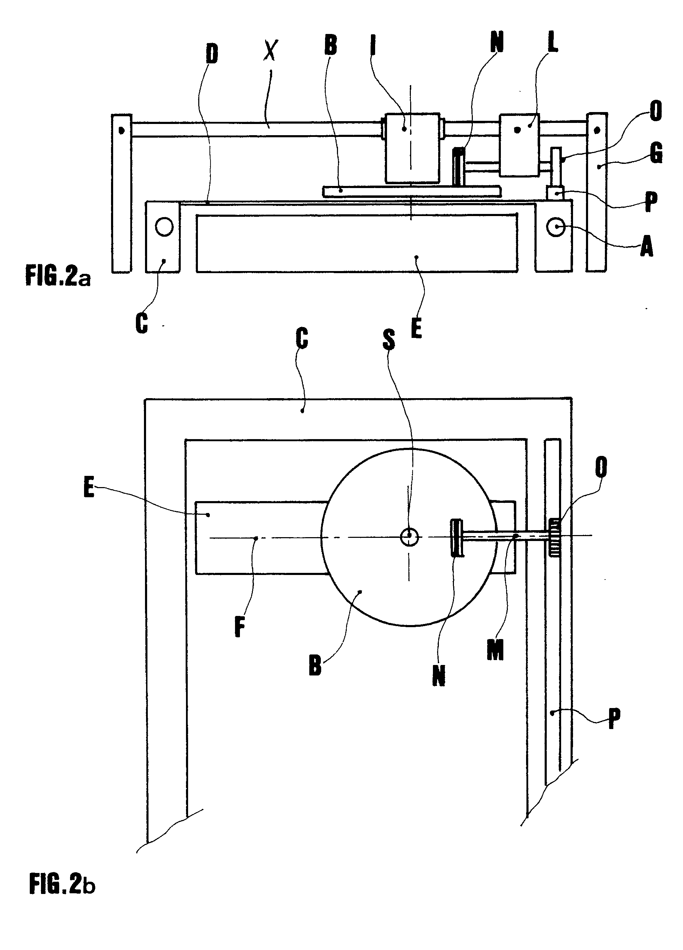

Sur les fig. 2a et 2b, nous pouvons remarquer en (A) les glissières qui guident le déplacement du châssis (C) sur lequel la vitre est repérée par la lettre (D). La lettre (E) désigne la boîte dans laquelle est logée la lampe et la lettre (F) désigne l'étroite fente qui sert à l'éclairage par balayage.

La lettre (G) désigne les supports solidaires de l'appareil qui soutiennent le coulisseau (I) portant le disque et le palier (L) dans lequel tourne l'axe commun du pignon denté (O) et de la roue à friction (N). Le palier (L) est porté par l'axe de pivotement (X) du coulisseau (I) et du support rabattable (H), et peut être pivoté autour de cet axe (X). La lettre (B) désigne le disque pour l'exposition, disque parfaitement centré, comme on le voit, sur le rais de lumière et entraîné par la roue à friction (N) qui est en contact avec lui, tandis qui cette roue reçoit son mouvement du pignon (O). En phase de travail, ce pignon engrène avec la crémaillère (P) qui est fixe avec le châssis (C) portant les originaux.

Le rapport de transmission entre la crémaillère et le pignon (O) étant égal au rapport entre la roue à friction (N) et le disque (B), on aura un mouvement dans lequel la vitesse de déplacement du châssis porte-originaux (C) est égale à la vitesse circonférentielle du disque. En déplaçant le coulisseau (I) qui porte le disque (B), on pourra réaliser tous les diamètres désirés.

Il est évident que, dans sa réalisation pratique, la présente invention pourra aussi prendre une forme différente de celle qui a été illustrée ci-dessus, mais toutes rentrent dans le même principe de conception de l'invention. On pourra en particulier changer les positions du châssis et du disque tournant ainsi que le système de transmission du mouvement du châssis au disque. En outre, tous les détails de construction pourront être remplacés par des éléments techniquement équivalents tels qu'ils apparaîtront évidents à un spécialiste de cette branche de la technique, sans pour autant sortir du cadre de protection de la présente invention telle que revendiquée.

## Revendications

1. Appareil photo-mécanique à contact capable de réaliser à partir d'un film original une image modifiée circulaire se refermant sur elle-même, ledit appareil comportant d'une part une fente (F) fixe, laissant passer un pinceau de lumière qui éclaire ledit film original qui est porté par un châssis (C) se déplaçant perpendiculairement audit pinceau de lumière, et d'autre part un disque rotatif (B) qui, en position de travail, porte sur sa face avant regardant ledit film une pellicule sensible, l'axe de rotation dudit disque (B) passant alors par ladite fente (F), caractérisé en ce que ledit axe peut être déplacé le long de cette fente (F), en ce que ledit disque (B) est porté par un support (H) rabattable par pivotement autour d'un axe fixe (X) entre une position de repos dégagée, permettant l'application de la pellicule sensible, et ladite position de travail, et en ce que, dans ladite position de travail, le disque (B) et le châssis (C) sont couplés de telle manière que le disque (B) est entraîné en rotation par ledit châssis (C).

2. Appareil selon la revendication 1, dans lequel le disque (B) est, dans sa position de travail, entraîné en rotation par une roue (N) revêtue d'une matière antifriction en contact avec la face arrière du disque (B), cette roue (N) recevant son mouvement d'un pignon denté (O) qui s'engrène avec une crémaillère (P) fixe par rapport au châssis (C) et se déplaçant avec lui.

3. Appareil selon la revendication 2, dans lequel la roue d'entraînenent (N) et le pignon (O) sont portés par un même axe tournant dans un palier (L) porté lui-même par l'axe de pivotement (X) du support rabattable (H).

## Claims

1. Photo-mechanical contact apparatus capable of producing, from an original film, a circular modified image which is closed on itself, said apparatus comprising, on the one hand, a fixed slot (F) allowing the passage of a beam of light which illuminates said original film carried by a frame (C) travelling perpendicularly to said beam of light and, on the other hand, a rotating disc (B) which, in the operating position, carries a sensitive film on its front face facing said original film, the axis of rotation of said disc (B) then passing through said slot (F), characterised in that said axis can be displaced along this slot (F), in that said disc (B) is carried by a support (H) which can be tilted by pivoting round a fixed shaft (X) between a released rest position allowing the application of the sensitive film and said operating position and in that, in said operating position, the disc (B) and the frame (C) are coupled such that the disc (B) is set into rotation by said frame (C).

2. Apparatus according to claim 1, in which the disc (B), in its operating position, is set into rotation by a wheel (N) coated with an antifriction substance in contact with the rear face of the disc (B), this wheel (N) receiving its movement from a toothed pinion (O) meshing with a rack (P) which is fixed relative to the frame (C) and travels therewith.

3. Apparatus according to claim 2, in which the driving wheel (N) and the pinion (O) are carried by the same shaft rotating in a bearing (L) itself carried by the pivot shaft (X) of the tiltable support (H).

## Ansprüche

1. Photomechanisches Kontaktgerät zum Herstellen einer geänderten kreisförmigen, sich an sich selbst wiederanschließenden Kopie von einem Originalfilm, wobei das Gerät einerseits einen festen Spalt (F) aufweist, der einen Lichtstrahl durchtreten läßt, der den Originalfilm beleuchtet, welcher von einem Rahmen (C) getragen wird, der sich senkrecht zum Lichtstrahl verlagert, und andererseits eine Drehscheibe (B), die in Arbeitsstellung auf ihrer Vorderfläche beim Berücksichtigen dieses Originalfilms einen empfindlichen Film trägt, während die Rotationsachse dieser Scheibe (B) danach am Spalt (F) vorbeifährt,
   **dadurch gekennzeichnet,**
   daß die Achse den Spalt (F) entlang verlagert werden kann,
   daß die Scheibe (B) von einer Stütze (H) getragen wird, die durch Schwenken um eine feste Achse (X) zwischen einer freien Ruhelage, die das Aufbringen des empfindlichen Films gestattet, und der Arbeitsstellung herabklappbar ist und
   daß in der Arbeitsstellung die Scheibe (B) und der Rahmen (C) derart verbunden sind, daß die Scheibe (B) durch den Rahmen (C) in Drehung versetzt wird.

2. Gerät nach Anspruch 1,
   **dadurch gekennzeichnet,**
   daß die Scheibe (B) in Arbeitsstellung durch ein Rad (N) in Drehung versetzt wird, das mit einem Friktionsmaterial über-zogen ist und die Rückseite der Scheibe (B) berührt, wobei dieses Rad (N) seine Drehung von einem Zahnritzel (0) erhält,
   das mit einer bezüglich des Rahmens (C) festen und sich mit diesem fortbewegenden Zahnstange (P) im Zahneingriff steht.

3. Gerät nach Anspruch 2,
   **dadurch gekennzeichnet,**
   daß das Antriebsrad (N) und das Ritzel (0) von derselben Welle getragen werden, die sich in einem Lager (L) dreht, das von der Schwenkachse (X) der herabklappbaren Stütze (H) getragen wird.

FIG.1c

FIG.1a

FIG.1d

FIG.1b

FIG.2a

FIG.2b